# EUROPEAN PATENT SPECIFICATION

(11) **EP 1 430 401 B1**
(45) Date of publication and mention of the grant of the patent: **16.07.2008**
(21) Application number: 02759729.3
(22) Date of filing: 18.09.2002
(51) Int. Cl.: G06F 12/08

(54) **EXTENDED CONTENT STORAGE METHOD AND APPARATUS**
VERFAHREN UND GERÄT ZUR ERWEITERTEN INHALTSSPEICHERUNG
PROCEDE ET APPAREIL DE STOCKAGE ETENDU DE CONTENU

(30) Priority: 24.09.2001 US 961626
(43) Date of publication of application: 23.06.2004
(73) Proprietor: Intel Corporation, Santa Clara, CA 95052 (US)
(72) Inventor: HAYDUK, Matt, Calgary, Alberta T3G 4N9 (CA)
(74) Representative: Dunlop, Hugh Christopher
(86) International application number: PCT/US2002/029801
(87) International publication number: WO 2003/027852

(56) References cited:
- EP-A- 0 633 694
- WO-A-01/59622
- WO-A-97/07486
- WO-A-99/48180
- US-B1- 6 216 197
- CHANDRA SURENDAR ET AL: "Managing the storage and battery resources in an image capture device (digital camera) using dynamic transcoding" PROCEEDINGS OF THE ACM INTERNATIONAL WORKSHOP ON WIRELESS MOBILE MULTIMEDIA (WOWMOM), 11 September 2000 (2000-09-11), pages 73-82, XP002351506

## Description

### Background Information

Mobile computing devices are gaining in popularity due to their increased portability and capability, which includes acquiring and retaining increasingly greater amounts of data pertaining to the individual user. During acquisition, the data is typically stored in a local memory, such as flash memory, or random access memory (RAM), which are both relatively expensive and always limited to that which is physically present in the device. Prior art solutions to increase local storage capability include simply adding more local memory, or physically coupling the mobile device directly to an external storage apparatus, such as a local disk drive. Such solutions are typically expensive, speed limited, and bulky.

Storing multi-media content acquired in real time, such as that generated by multi-megapixel digital video cameras operating at several frames per second, is especially challenging. Thus, even though the number of peripherals and avenues for the generation of local content with regard to a particular mobile computing device are more varied than ever, the amount of such content which can be stored locally by the user is ultimately limited by the size of local memory and/or other local storage devices.

Even when local content can be successfully acquired, the ability to review previously-acquired content during acquisition of subsequent portions may be limited or nonexistent. Reviewing acquired content may be prevented by the speed of the processor within the computing device, or the inability of the mobile device to retain both initial and subsequent portions of the content. Further, review of the content may be abandoned by the user simply because it is determined that only a portion of the content can be acquired (e.g., when local storage is overrun during acquisition). Finally, while mobile computing devices may have the ability to communicate over one or more networks, the speed and capability of the various available networks is typically considered irrelevant with respect to the local storage problem.

Thus, there is a need in the art to provide extended storage capability for mobile computation devices, such as client elements, such that local content may be acquired and stored in a relatively unlimited fashion. In addition, there is a continuing need to provide an extended content storage that has the ability to review acquired content while subsequent acquisition and storage occur, to ensure the quality and verify the substance of what has been acquired.

WO 01/59622 A describes a method and system for remotely storing data on a server through a wireless connection instead of storing data locally in a consumer device, as well as devices for use with the method and system. More particularly, a video camera, still camera, laptop computer, or other consumer device which normally stores data in local memory such as film, disk, random access memory, memory sticks, or other forms of storage would transmit the data to a remote server through a wireless connection. The data would be saved on the remote server for subsequent retrieval through, for example, a wireless connection to the Internet and on to the server, or a wireless connection to the server.

WO 99/48180 A discloses an intelligent converter interface between a camera and a modem, thereby allowing image signals from the camera to be sent by the modem over standard telephone lines to a remote server. The digital parallel output of the camera is converted to serial to output to a modem. Digital pixel data bits are converted to ASCII format for transmission over standard telephone lines by use of a modem.

CHANDRA SURENDAR ET AL: "Managing the storage and battery resources in an image capture device (digital camera) using dynamic transcoding" PROCEEDINGS OF THE ACM INTERNATIONAL WORKSHOP ON WIRELESS MOBILE MULTIMEDIA (WOWMOM), 11 September 2000 (2000-09-11), pages 73-82, discloses an extended local content storage system comprising transcoding and uploading of digital images from a digital camera to a remote server through fast wireless networks.

### Brief Description of the Drawings

Figure 1 is a schematic block diagram of an extended content storage system, including a client element, according to an embodiment of the present invention; and
Figure 2 is a flow chart illustrating a method of extending storage for content according to an embodiment of the present invention.

### Description of the Preferred Embodiments

In the following detailed description of the invention, reference is made to the accompanying drawings which form a part hereof, and in which are shown by way of illustration, and not of limitation, specific embodiments in which the invention may be practiced. In the drawings, like numerals describe substantially similar components throughout the several views. The embodiments illustrated are described in sufficient detail to enable those skilled in the art to practice the invention. Other examples may be utilized and derived therefrom, such that structural, logical, and electrical circuit substitutions and changes may be made without departing from the scope of the invention. The following detailed description, therefore, is not to be taken in a limiting sense, and the scope of the invention is defined only by the appended claims.

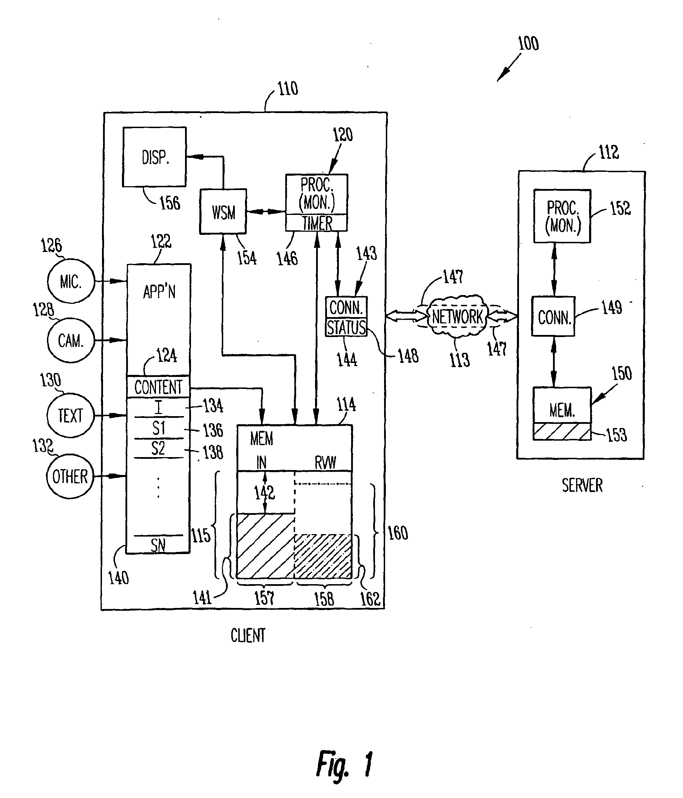

Figure 1 is a schematic block diagram of an extended content storage system, including a client element, according to an embodiment of the present invention. The system 100 includes a client element 110 communicatively coupled to a server element 112 by way of a communications medium 113, such as a network, including a global telecommunications network, and/or a wireless network. The client element 110, which may be a cellular telephone, a wireless personal digital assistant (PDA), a personal internet client, a two-way pager, or some other mobile two-way communications device, typically includes a memory, which may be an embedded memory 114 with a storage limit 115. The memory 114 is communicatively coupled to a monitoring module 120, which may take the form of a processor coupled to a memory and software (not shown).

The client element 110 typically includes an application 122 which operates to acquire content 124 from various peripherals or sources of data, such as, for example, a microphone 126, a camera 128, a text input device 130, and/or some other device 132, including a high-speed data storage device, such as, for example, an external memory, a serial port, a disk drive, or a data acquisition system. The content 124 may be divided into an initial portion 1134, and one or more subsequent portions S1 136, S2 138, ..., SN 140.

During execution of the application 122, the initial portion 134 of the content 124 is acquired and stored in the local memory 114. As the initial portion 134 is acquired, the memory 114 begins to fill up with the stored content 141, such that the remaining memory tends toward zero (as the storage limit 115 is reached). For example, if the size of the memory 114 is 16 Mbytes and the storage limit 115 is 8 Mbytes, the amount of remaining memory 142 will be 2 Mbytes if there is 6 Mbytes of stored content 141. Assuming that the size of the initial portion 134 is selected to be 7 Mbytes, and that the total amount of content is 24 Mbytes (i.e., 1+S1+S2+...+SN), some type of additional activity should occur to allow additional content 124 to be stored.

In this case the monitoring element 120 typically monitors the amount of remaining memory 142, along with the type and transmission rate of the content 124. These characteristics of the content 124 may be communicated to the module 120 prior to, or during, storage of the initial portion 134, or the module 120 may operate to determine these and other characteristics of the content 124 as acquisition and storage of the content proceeds. The "characteristics" of the content 124 may be defined to be any descriptive parameter of the content 124 which can be numerically quantified, such as the rate of acquisition, the total size of the content in bytes, the expected, forecast, or actual statistical variation in the acquisition rate, the type of content, such as MP3-coded audio, or MPEG-coded video, etc.) To this end, a timer 146 may be coupled to the module 120 to assist with the determination of how rapidly the content 124 is being acquired, and when the storage limit 115 will be reached.

Prior to exceeding the storage limit 141, perhaps considering the amount of remaining memory 142 and the rate of acquisition, a connection module 143 within the client element 110 communicatively coupled to the monitoring module 120 may operate to establish an active communications connection 147 between the client element 110 and the server element 112. The type of connection 147, such as a Bluetooth™ connection, a cellular network connection, or a modem connection to the Internet may be determined according to several factors, including the cost of the connection, the rate of content acquisition, the amount of content to be acquired, privileges available to the user of the client element, and/or the location of the client element in relation to the server element, among others. Thus, connection 147 may also be associated with a status 148, such as connected, maintained, or disconnected.

The server element 112 typically includes a connection module 149 communicatively coupled to a memory 150 and a monitoring module 152 (typically in the form of a processor executing one or more applications). After the connection 147 is established, some or all of the initial portion 134 of the content 124 may be delivered to the server element 112 and stored in the server memory 150. As this occurs, subsequent portions 136, 138, ..., 140 may also be acquired and stored in the memory 114 of the client element 110. The connection 147 may be terminated and re-established as needed to move subsequent portions 136, 138, ..., 140 to the server element 112 for storage in the memory 150. In this way, the local memory 114 of the client element 110 will likely not be overrun, and a virtually unlimited amount of content 124 storage may be accommodated via the network 113 and the server element memory 150. In fact, over the period of time needed to acquire all of the content 124, multiple connections 147 may be established, disconnected, and re-established in order to accommodate even greater rates of content storage, and the status 148 of each connection 147 may be monitored by the connection module 143. This process also saves air-link bandwidth since a single connection 147 is not necessarily dedicated to the client element 110 for the entire term of the content acquisition session.

The system 100 and client element 110 may also provide the capability of reviewing the acquired content 141, 153 after at least some of the initial portion 134 of the content 124 has been acquired. This may be accomplished using a windowed service module (WSM) 154 included in the client element 110, typically coupled to the monitoring module 120. Thus, as the initial portion 134 of the content 124 is acquired, the WSM 154 may divide or allocate the memory 114 into an input memory 157 and a review memory 158. A portion of the content stored in the input memory may be copied to the review memory for use by the WSM 154 to show the content on a display 156. Alternatively, the memory 114 may be of the multi-port type, e.g., a dual-port RAM, such that the monitoring module 120 may extract data for transmission to the server element 112 from one memory 114 port at the same time that data is sent from another memory 114 port to the WSM 154 on the way to the display 156. Finally, portions 153 of the content 124 that have already been stored in the memory of the server element memory 150 may be sent over one or more network connections 147 for storage in the review memory 158. The content 162 of the review memory 158 may likewise be monitored by the monitoring module 120 to verify that the review content 162 has not exceeded the new storage limit 160, similar to or identical to the manner in which media is currently streamed to desktop computers for real time display, as is well-known to those skilled in the art. Monitoring of the acquisition process may thus be accomplished using only the monitoring module 120 in the client element 110, or as a combined effort conducted between one monitoring module 120 located in the client element 110, and another monitoring module 152 located in the server element 112, communicating with each other over the network 113.

The WSM 154 may process the content 124 to be shown on the display 156 (or sent to speakers and/or other peripherals, not shown in the drawing) as raw data (e.g., binary or hexadecimal). Alternatively, the WSM 154 may be apprised of the content type (e.g., MP3-encoded audio, MPEG-encoded video, etc.) and display the content 124 after decoding the raw data according to the content type coding standard.

Thus, the invention also includes a client element 110 which has a monitoring module 120, a local memory 114 communicatively coupled to the monitoring module 120, and a communications medium interface 148, which may be a wireless communications medium interface including a connection module143, communicatively coupled to the local memory 114. As noted above, the local memory is typically associated with a selected storage limit 115. The client element 110 may also include a WSM 154 coupled to the monitoring module 120. One or more data acquisition elements, such as a microphone 126, a camera 128, a text input device 130, and/or some other device 132, including a high-speed data storage device, such as an external memory, a disk drive, a wireless receiver, a modem, a wireline receiver, a communications port, an analog-to-digital conversion device, or even an entire data acquisition system may be communicatively coupled to the local memory 114.

It should be noted that the monitoring module 120, application 122, connection module 143, timer 146, connection module 149, monitoring module 152, and WSM 154 may all be characterized as "modules" herein. Such "modules" may include hardware circuitry, such as a microprocessor and memory, software program modules, or firmware, and combinations thereof, as desired by the architect of the system 100, and appropriate for particular implementations of the invention. Further, while the monitoring module 120 of the invention may comprise a single module 120 coupled to the client element 110, residing within or without the client element, the monitoring module 120 may also operate as a monitoring module 120 which shares the duty of monitoring the transmission and storage of the content 124 by communicating with another monitoring module 152, coupled to the server element 112, and residing within or without the server element 112.

One of ordinary skill in the art will understand that system and apparatus of the present invention may be used other applications, and thus, the invention is not to be so limited. The illustrations of a system 100, a client element 110, and a server element 112 are intended to provide a general understanding of the structure of the present invention, and are not intended to serve as a complete description of all the elements and features of extended content storage systems, client elements, and server elements which might make use of the structures described herein.

Applications which may include the novel extended content storage system, client element, and server element of the present invention include electronic circuitry used in high-speed computers, communications ports and other equipment, modems, processor modules, embedded processors, and application-specific modules, including multilayer, multi-chip modules. Such systems, clients, and servers may further be included as sub-components within a variety of electronic systems, such as televisions, cellular telephones, personal computers, personal radios, automobiles, aircraft, and others.

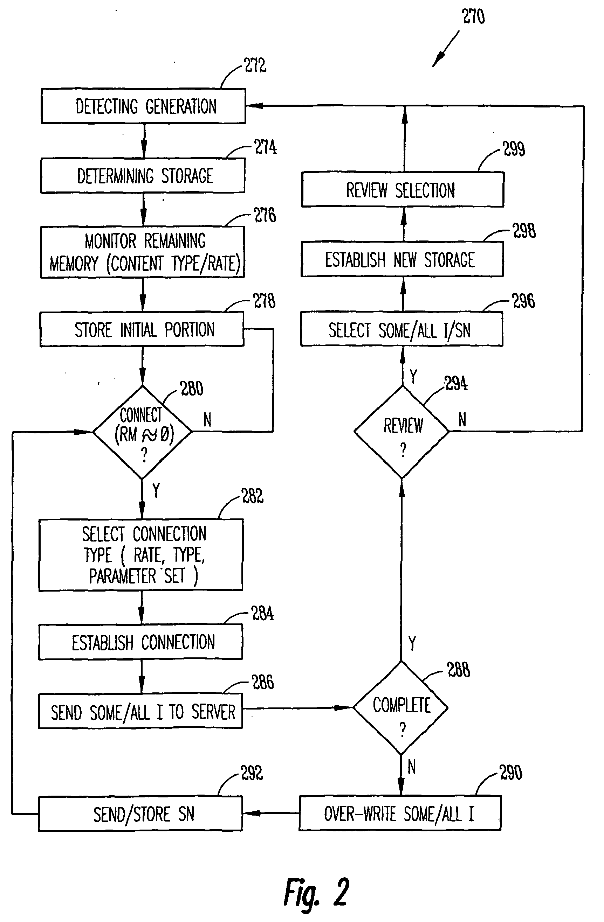

Figure 2 is a flow chart illustrating a method of extending storage for content according to the present invention. The method may begin with detecting generation of the content at block 272, determining that the content is to be stored in the local memory associated with a selected storage limit at block 274, and then monitoring the remaining amount of memory corresponding to the storage limit at block 276. This process may include monitoring the type of content to be acquired and stored, and the rate at which the content is generated/stored.

At this point, some or all of the initial portion of the content may be stored in the local memory (block 278). Storage of the initial portion continues until it is determined that the remaining amount of memory is approaching zero, or is approximately equal to zero (block 280) (i.e., given the rate of data transmission and other relevant factors, it is determined that the time required to establish a connection would cause the storage limit to be exceeded, and/or any remaining local memory to be overrun). In other words, block 280 refers to determining that the remaining amount of memory will be approximately equal to zero within a calculated time period associated with a connection to be established between the client element and a server element. When this occurs, a connection type associated with a connection to be established with a server may be selected at block 282, based on the rate of acquisition and/or storage, the content type and/or its characteristics, and/or a set of parameters associated with the network 113 or the system 100. Such parameters might include the location of the server element, the location of the client element, the cost of the connection, the selected storage limit, and other factors which may have been determined by the client, the server, or some other network element or peripheral connected to the client. The process of establishing a connection between the client and server elements may also take into account the length of time required to establish a connection, as this may be highly variable depending on the nature of the physical devices used to effect the connection (e.g. telephone modem, dedicated T1 line, etc.). Whether a connection will be established at all may also be determined at block 280, by monitoring the connection setup time, content transmission rate, the time required to begin transferring the content to the server, and the amount of local memory remaining.

Once the connection type is selected in block 282, one or more connections may be established between the client element and the server element at block 284. A selected part of the initial portion of the content may then be sent to the server element from the client element using the established connection at block 286, and transport of the content across the network connection(s) continues until the monitoring element in the client (or cooperating monitoring elements in the client and server, respectively) determine that all of the content which is to be passed from the client element to the server element during a particular session has been sent to the server for storage in its memory. Some or all of the initial portion may be made available for over-write (or even deleted from the local memory of the client) at block 290 to accommodate acquisition and storage of subsequent portions in the local memory so that these subsequent portions, in turn, can be sent to the server element for storage at block 292. The process continues as the amount of remaining local memory is continually monitored by the client element monitoring module, and connections are established, disconnected, and re-established as more of the content is sent to the server (blocks 280 ... 286). Data transfer between the client and server elements may also be optimized to support any wireless technology which is used to effect the connection, such as circuit switched, short message service, packet data, etc.).

As mentioned previously, and depending on the rate of content acquisition and/or storage, one or more network connections between the client and server elements may be established, disconnected, and re-established, as needed. A connection module in the client (or cooperating connections modules in the client and server elements, respectively) may monitor the status of the connections (s) during the process, denoted above as: connected, maintained, or disconnected.

At some point during the content acquisition and storage process, or after its completion, the method of the invention may include using a WSM residing on the client element to review some or all of the content. Thus, the method may include selecting some portion of the content (e.g., some or all of the initial portion, or one of the subsequent portions) for review at block 296, establishing a new storage limit associated with the local review memory which is generally less than the previously selected storage limit (for the input memory) at block 298, and then reviewing the selected part of the initial or subsequent portion of the content at the client element using the WSM at block 299. The method 270 may end at this point, or continue with the generation and acquisition of other content at block 272.

The apparatus and method of the invention provides a seamless storage mechanism as perceived by the client user. Thus, the local memory is no longer considered to be the absolute storage limit for locally-generated content. Local content can thus be acquired and stored in a relatively unlimited fashion. The extended content storage of the present invention also provides the ability to review acquired content while subsequent storage takes place, enabling verification of the quality and substance of that which has been acquired. Securing these advantages does not require procuring additional expensive hardware, or attaching bulky physical objects to the client element.

Although specific embodiments have been illustrated and described herein, those of ordinary skill in the art will appreciate that any arrangement which is calculated to achieve the same purpose may be substituted for the specific embodiments shown. This disclosure is intended to cover any and all adaptations or variations of the present invention. It is to be understood that the above description has been made in an illustrative fashion, and not a restrictive one. Combinations of the above embodiments, and other examples not specifically described herein will be apparent to those of skill in the art upon reviewing the above description. The scope of the invention should be determined with reference to the appended claims.

## Claims

1. An extended local content storage system (100), comprising:
a client element (110) including an application (122) to receive an initial portion (134) of local content (124) and a subsequent portion (136, 138, 140) of the local content, and a local memory (114) being associated with a selected storage limit (115) less than or equal to the initial portion of the local content;
a monitoring module (120) communicatively coupled to the local memory for monitoring the amount of remaining memory associated with the selected storage limit wherein an initial portion (134) of the local content is stored in the local memory; and
a server element (112) capable of being communicatively coupled to the client element and having a server memory (150) to store the initial portion of the local content and the subsequent portion of the local content depending on the amount of remaining memory associated with the selected storage limit;
wherein said system is adapted to
conduct said monitoring in order to determine that the remaining amount of memory will be equal to zero within a calculated time period associated with storing a subsequent portion (136, 138, 140) of the local content and with a connection to be established between a client element (110) and a server element (112); and
upon establishing (284) a connection between the client element including the local memory and the server element including a server memory (150), to send a selected part of the initial portion of the local content to the server element from the client element using the connection.

2. The extended local content storage system (100) of claim 1, further comprising:
a communications medium (113) capable of being communicatively coupled to the client element (110) and the server element (112).

3. The extended local content storage system (100) of claim 1, wherein the monitoring module (120) monitors a content type and a transmission rate associated with the local content (124).

4. The extended local content storage system (100) of claim 1, further comprising a connection module (143) communicatively coupled to the monitoring module (120).

5. The extended local content storage system (100) of claim 2, wherein a status of the communications medium (143) is selected from one of: connected, maintained, and disconnected.

6. The extended local content storage system (100) of claim 1, wherein the client element (100) includes a windowed service module (154) coupled to the local memory (114) for review of the initial and subsequent portions of the local content (124).

7. The extended local content storage system (100) of claim 6, wherein the windowed service module (154) is coupled to a display (156).

8. The extended local content storage system (100) of claim 1, wherein the monitoring module (120) comprises a first monitoring module (120) residing within the client element (110) communicating with a second monitoring module (152) residing within the server element (112).

9. The extended local content storage system (100) of claim 1, wherein the communications medium (113) includes a wireless network.

10. The extended local content storage system (100) of claim 1, wherein the monitoring module (120) is coupled to a timer (146).

11. A client element (110) for extended storage of local content (124), comprising:
a monitoring module (120); and
a local memory (114) communicatively coupled to the monitoring module, the local memory to store an initial portion (134) of the local content and a subsequent portion (136, 138, 140) of the local content, the local memory being associated with a selected storage limit (115) monitored by the monitoring module less than or equal to the initial portion of the local content;
a communication interface coupled to the local memory and to a server element for storing the initial portion of the local content on a server;
wherein said system is adapted to
conduct said monitoring in order to determine that the remaining amount of memory will be equal to zero within a calculated time period associated with storing a subsequent portion (136, 138, 140) of the local content and with a connection to he established between a client element (110) and a server element (112); and
upon establishing (284) a connection between the client element including the local memory and a server element (112) including a server memory (150), to send a selected part of the initial portion of the local content to the server element from the client element using the connection.

12. The client element (110) of claim 11, further comprising:
a wireless communications medium interface (148) communicatively coupled to the local memory (114) and capable of being communicatively coupled to a server element (112) for storing the initial portion (134) of the local content (124) on the server element.

13. The client element (110) of claim 11, further comprising:
a windowed service module (154) coupled to the local memory (114).

14. The client element (110) of claim 11, further comprising:
a data acquisition element communicatively coupled to the local memory (114).

15. The client element (110) of claim 14, wherein the data acquisition element (122) is selected from one of: a text input device (130), a wireless receiver, a communications port, a modem, a wireline receiver, an analog-to-digital conversion device, a storage device, a camera (128), and a microphone (126).

16. A method of extending storage for local content (124), comprising:
monitoring (276) a remaining amount of memory associated with a selected storage limit (115) in a local memory (114),
storing (278) an initial portion (134) of the local content in the local memory;
determining (280) that the remaining amount of memory will be equal to zero within a calculated time period associated with storing a subsequent portion (136, 138, 140) of the local content and with a connection to be established between a client element (110) and a server element (112);
establishing (284) the connection between the client element including the local memory and the server element including a server memory (150); and
sending (286) a selected part of the initial portion of the local content to the server element from the client element using the connection.

17. The method of claim 16, further including:
determining that the local content (124) is to be stored in the local memory (114).

18. The method of claim 16, further including:
storing the subsequent portion (136, 138, 140) of the local content (124) in the local memory (114).

19. The method of claim 16, further including:
detecting (272) generation of the local content (124).

20. The method of claim 16, further including:
monitoring (276) a content type and data transmission rate associated with the local content (124).

21. The method of claim 20, wherein a connection type associated with the connection is determined in accordance with the content type and data transmission rate.

22. The method of claim 16, further including:
deleting the selected part of the initial portion (134) from the local memory (114).

23. The method of claim 16, wherein establishing (284) a connection between a client element (110) including the local memory (114) and a server element (112) further includes:
selecting (282) a connection type associated with the connection according to a set of parameters.

24. The method of claim 23, wherein the set of parameters includes one of a location of the server element (112), a location of the client element (110), a cost of the connection, the selected storage limit (115), and a content type and data transmission rate associated with the local content (124).

25. The method of claim 16, further including:
reviewing (299) a selected part of the local content (124) at the client element (110) using a windowed service module (154) included in the client element.

26. The method of claim 25, further including:
establishing (298) a new selected storage limit associated with the local memory (114) which is less than the selected storage limit (115).

27. The method of claim 16, further including:
dividing the local memory (114) into an input memory and a review memory.

28. The method of claim 16, further including:
reviewing (299) a selected part of the subsequent portion (136, 138, 140) of the local content (124) at the client element (110) using a windowed service module (154) residing at the client element.

## Patentansprüche

1. Erweitertes lokales Inhaltspeichersystem (100), umfassend:
ein Client-Element (110) einschließlich einer Anwendung (122) zum Empfangen eines anfänglichen Abschnitts (134) des lokalen Inhalts (124) und eines nachfolgenden Abschnitts (136, 138, 140) des lokalen Inhalts, und eines lokalen Speichers (114), der mit einer ausgewählten Speichergrenze (115) verknüpft ist, die kleiner oder gleich dem anfänglichen Abschnitt des lokalen Inhalts ist;
ein mit dem lokalen Speicher kommunikativ gekoppeltes Überwachungsmodul (120) zum Überwachen der Menge des mit der ausgewählten Speichergrenze verbleibenden Speichers, wobei ein anfänglicher Abschnitt (134) des lokalen Inhalts im lokalen Speicher gespeichert ist; und
ein Server-Element (112), das fähig ist, kommunikativ mit dem Client-Element gekoppelt zu werden, und einen Server-Speicher (150) aufweist, in dem der anfängliche Abschnitt des lokalen Inhalts und der nachfolgende Abschnitt des lokalen Inhalts, abhängig von der Menge des mit der ausgewählten Speichergrenze verknüpften verbleibenden Speichers gespeichert werden kann;
wobei das System darauf eingerichtet ist,
die Überwachung durchzuführen, um zu bestimmen, dass die verbleibende Menge Speicher innerhalb einer berechneten Zeitperiode, die mit dem Speichern eines nachfolgenden Abschnitts (136, 138, 140) des lokalen Inhalts und mit einer zwischen einem Client-Element (110) und einem Server-Element (112) einzurichtenden Verbindung verknüpft ist, gleich Null ist; und
nach Einrichten (284) einer Verbindung zwischen dem den lokalen Speicher enthaltenden Client-Element und dem einen Server-Speicher (150) enthaltenden Server-Element einen ausgewählten Teil des anfänglichen Abschnitts des lokalen Inhalts unter Einsatz der Verbindung an das Server-Element vom Client-Element zu senden.

2. Erweitertes lokales Inhaltspeichersystem (100) nach Anspruch 1, ferner umfassend
ein Kommunikationsmedium (113), das fähig ist, kommunikativ mit dem Client-Element (110) und dem Server-Element (112) gekoppelt zu werden.

3. Erweitertes lokales Inhaltspeichersystem (100) nach Anspruch 1, wobei das Überwachungsmodul (120) einen Inhaltstyp und eine mit dem lokalen Inhalt (124) verknüpfte Übertragungsrate überwacht.

4. Erweitertes lokales Inhaltspeichersystem (100) nach Anspruch 1, ferner umfassend ein Verbindungsmodul (143), das kommunikativ an das Überwachungsmodul (120) gekoppelt ist.

5. Erweitertes lokales Inhaltspeichersystem (100) nach Anspruch 2, wobei ein Status des Kommunikationsmediums (143) auswählbar ist zwischen: verbunden, aufrechterhalten und unterbrochen.

6. Erweitertes lokales Inhaltspeichersystem (100) nach Anspruch 1, wobei das Client-Element (100) ein mit Fenster versehenes Service-Modul (154) beinhaltet, welches an den lokalen Speicher (114) gekoppelt ist, um den anfänglichen und nachfolgende Abschnitt des lokalen Inhalts (124) zu überprüfen.

7. Erweitertes lokales Inhaltspeichersystem (100) nach Anspruch 6, wobei das mit Fenster versehene Service-Modul (154) an eine Anzeige (156) gekoppelt ist.

8. Erweitertes lokales Inhaltspeichersystem (100) nach Anspruch 1, wobei das Überwachungsmodul (120) ein innerhalb des Client-Elements (110) residierendes erstes Überwachungsmodul (120) umfasst, welches Client-Element mit einem zweiten innerhalb des Server-Elements (112) residierenden Überwachungsmodul (152) kommuniziert.

9. Erweitertes lokales Inhaltspeichersystem (100) nach Anspruch 1, wobei das Kommunikationsmedium (113) ein drahtloses Netz beinhaltet.

10. Erweitertes lokales Inhaltspeichersystem (100) nach Anspruch 1, wobei das Überwachungsmodul (120) an einen Zeitgeber (146) gekoppelt ist.

11. Client-Element (110) für die erweitere Speicherung des lokalen Inhalts (124), umfassend:
ein Überwachungsmodul (120); und
einen an das Überwachungsmodul kommunikativ gekoppelten lokalen Speicher (114), der zum Speichern eines anfänglichen Abschnitts (134) des lokalen Inhalts und zum Speichern eines nachfolgenden Abschnitts (136, 138, 140) des lokalen Inhalts dient, wobei der lokale Speicher mit einer von dem Überwachungsmodul überwachten ausgewählten Speichergrenze (115) verknüpft ist, die kleiner oder gleich des anfänglichen Abschnitts des lokalen Inhalts ist;
eine an den lokalen Speicher und ein Server-Element gekoppelte Kommunikationsschnittstelle zum Speichern des anfänglichen Abschnitts des lokalen Inhalts an einen Server;
wobei das System darauf eingerichtet ist,
die Überwachung durchzuführen, um zu bestimmen, dass die verbleibende Menge Speicher innerhalb einer berechneten Zeitperiode, die mit dem Speichern eines nachfolgenden Abschnitts (136, 138, 140) des lokalen Inhalts und mit einer zwischen einem Client-Element (110) und einem Server-Element (112) einzurichtenden Verbindung verknüpft ist, gleich Null ist; und
nach Einrichten (284) einer Verbindung zwischen dem den lokalen Speicher enthaltenden Client-Element und dem einen Server-Speicher (150) enthaltenden Server-Element (112) einen ausgewählten Teil des anfänglichen Abschnitts des lokalen Inhalts unter Einsatz der Verbindung an das Server-Element vom Client-Element zu senden.

12. Client-Element (110) nach Anspruch 11, ferner umfassend:
eine an den lokalen Speicher (114) kommunikativ gekoppelte drahtlose Kommunikationsschnittstelle (148), die fähig ist, kommunikativ an ein Server-Element (112) gekoppelt zu werden, um den anfänglichen Abschnitt (134) des lokalen Inhalts (124) auf dem Server-Element zu speichern.

13. Client-Element (110) nach Anspruch 11, ferner umfassend:
ein an den lokalen Speicher (114) gekoppeltes mit Fenster versehenes Service-Modul (154).

14. Client-Element (110) nach Anspruch 11, ferner umfassend:
ein an den lokalen Speicher (114) kommunikativ gekoppeltes Datenerfassungselement.

15. Client-Element (110) nach Anspruch 14, wobei das Datenerfassungselement (122) auswählbar ist aus: einer Texteingabevorrichtung (130), einem drahtlosen Empfänger, einem Kommunikationsport, einem Modem, einem leitungsverbundenen Empfänger, einer Analog-zu-Digital-Wandlervorrichtung, einer Speichervorrichtung, einer Kamera (128) und einem Mikrophon (126).

16. Verfahren zur Erweiterung des Speichers für lokalen Inhalt (124), umfassend:
Überwachen (276) einer mit einer ausgewählten Speichergrenze (115) verknüpften verbleibenden Menge Speicher in einem lokalen Speicher (114),
Speichern (278) eines anfänglichen Abschnitts (134) des lokalen Inhalts im lokalen Speicher;
Bestimmen (280), dass die verbleibende Menge Speicher innerhalb einer berechneten Zeitperiode, die mit dem Speichern eines nachfolgenden Abschnitts (136, 138, 140) des lokalen Inhalts und mit einer zwischen einem Client-Element (110) und einem Server-Element (112) einzurichtenden Verbindung verknüpft ist, gleich Null ist;
Einrichten (284) der Verbindung zwischen dem den lokalen Speicher enthaltenden Client-Element und dem einen Server-Speicher (150) enthaltenden Server-Element; und
Senden (286) eines ausgewählten Teils des anfänglichen Abschnitts des lokalen Inhalts unter Einsatz der Verbindung an das Server-Element vom Client-Element.

17. Verfahren nach Anspruch 16, ferner beinhaltend:
Bestimmen, dass der lokale Inhalt (124) im lokalen Speicher (114) zu speichern ist.

18. Verfahren nach Anspruch 16, ferner beinhaltend:
Speichern des nachfolgenden Abschnitts (136, 138, 140) des lokalen Inhalts (124) im lokalen Speicher (114).

19. Verfahren nach Anspruch 16, ferner beinhaltend:
Detektieren (272) der Erzeugung des lokalen Inhalts (124).

20. Verfahren nach Anspruch 16, ferner beinhaltend:
Überwachen (276) eines mit dem lokalen Inhalt (124) verknüpften Inhaltstyps und einer Datenübertragungsrate.

21. Verfahren nach Anspruch 20, wobei ein mit der Verbindung verknüpfter Verbindungstyp gemäß des Inhaltstyps und der Datenübertragungsrate bestimmt wird.

22. Verfahren nach Anspruch 16, ferner beinhaltend:
Löschen des ausgewählten Teils des anfänglichen Abschnitts (134) aus dem lokalen Speicher (114).

23. Verfahren nach Anspruch 16, wobei das Einrichten (284) einer Verbindung zwischen einem den lokalen Speicher (114) enthaltenden Client-Element (110) und einem Server-Element (112) ferner beinhaltet:
Auswählen (282) eines mit der Verbindung verknüpften Verbindungstyps gemäß eines Satzes von Parametern.

24. Verfahren nach Anspruch 23, wobei der Satz von Parametern beinhaltet: einen Ort des Server-Elements (112), einen Ort des Client-Elements (110), die Kosten der Verbindung, die ausgewählte Speichergrenze (115) oder einen mit dem lokalen Inhalt (124) verknüpften Inhaltstyp und eine Datenübertragungsrate.

25. Verfahren nach Anspruch 16, ferner beinhaltend:
Überprüfen (299) eines ausgewählten Teils des lokalen Inhalts (124) am Client-Element (110) unter Einsatz eines im Client-Element enthaltenen, mit Fenster versehenen Service-Moduls (154).

26. Verfahren nach Anspruch 25, ferner beinhaltend:
Einrichten (298) einer mit dem lokalen Speicher (114) verknüpften neuen ausgewählten Speichergrenze, die kleiner als die ausgewählte Speichergrenze (115) ist.

27. Verfahren nach Anspruch 16, ferner beinhaltend:
Aufteilen des lokalen Speichers (114) in einen Eingangsspeicher und einen Überprüfungsspeicher.

28. Verfahren nach Anspruch 16, ferner beinhaltend:
Überprüfen (299) eines ausgewählten Teils des nachfolgenden Abschnitts (136, 138, 140) des lokalen Inhalts (124) am Client-Element (110) unter Einsatz eines im Client-Element residierenden, mit Fenster versehenen Service-Moduls (154).

## Revendications

1. Système de stockage de contenu local étendu (100), comprenant :
un élément client (110) comprenant une application (122) pour recevoir une partie initiale (134) dun contenu local (124) et une partie subséquente (136, 138, 140) du contenu local, et une mémoire locale (114) étant associée à une limite de stockage sélectionnée (115) inférieure ou égale à la partie initiale du contenu local;
un module de surveillance (120) couplé de manière communicative à la mémoire locale pour surveiller la quantité de mémoire restante associée à la limite de stockage sélectionnée, où une partie initiale (134) du contenu local est stockée dans la mémoire locale ; et
un élément serveur (112) capable d'être couplé de manière communicative à l'élément client et ayant une mémoire de serveur (150) pour stocker la partie initiale du contenu local et la partie subséquente du contenu local en fonction de la quantité de mémoire restante associée à la limite de stockage sélectionnée ;
dans lequel ledit système est adapté pour :
conduire ladite surveillance de manière à déterminer que la quantité restante de mémoire sera égale à zéro dans une période de temps calculée associée au stockage d'une partie subséquente (136, 138, 140) du contenu local et avec une connexion à établir entre un élément client (110) et un élément serveur (112) ; et
lors de rétablissement (284) dune connexion entre l'élément client comprenant la mémoire locale et l'élément serveur comprenant une mémoire de serveur (150), envoyer une partie sélectionnée de la partie initiale du contenu local à l'élément serveur depuis l'élément client à l'aide de la connexion.

2. Système de stockage de contenu local étendu (100) selon la revendication 1, comprenant en outre :
un support de communication (113) capable d'être couplé de manière communicative à l'élément client (110) et à l'élément serveur (112).

3. Système de stockage de contenu local étendu (100) selon la revendication 1, dans lequel le module de surveillance (120) surveille un type de contenu et une vitesse de transmission associée au contenu local (124).

4. Système de stockage de contenu local étendu (100) selon la revendication 1, comprenant en outre un module de connexion (143) couplé de manière communicative au module de surveillance (120).

5. Système de stockage de contenu local étendu (100) selon la revendication 2, dans lequel un état du support de communication (143) est sélectionné parmi les états suivants : connecté, maintenu et déconnecté.

6. Système de stockage de contenu local étendu (100) selon la revendication 1, dans lequel l'élément client (100) comprend un module de service à fenêtre (154) couplé à la mémoire locale (114) pour réviser les parties initiale et subséquente du contenu local (124).

7. Système de stockage de contenu local étendu (100) selon la revendication 6, dans lequel le module de service à fenêtre (154) est couplé à un écran d'affichage (156).

8. Système de stockage de contenu local étendu (100) selon la revendication 1, dans lequel le module de surveillance (120) comprend un premier module de surveillance (120) résidant dans l'élément client (110) communiquant avec un second module de surveillance (152) résidant dans l'élément serveur (112).

9. Système de stockage de contenu local étendu (100) selon la revendication 1, dans lequel le support de communication (113) comprend un réseau sans fil.

10. Système de stockage de contenu local étendu (100) selon la revendication 1, dans lequel le module de surveillance (120) est couplé à un temporisateur (146).

11. Élément client (110) pour stockage étendu de contenu local (124), comprenant :
un module de surveillance (120) ; et
une mémoire locale (114) couplée de manière communicative au module de surveillance, la mémoire locale stockant une partie initiale (134) du contenu local et une partie subséquente (136, 138, 140) du contenu local, la mémoire locale étant associée à une limite de stockage sélectionnée (115) surveillée par le module de surveillance pour être inférieure ou égale à la partie initiale du contenu local ;
une interface de communication couplée à la mémoire locale et à un élément serveur pour stocker la partie initiale du contenu local sur un serveur ;
dans lequel ledit système est adapté pour :
conduire ladite surveillance de manière à déterminer que la quantité restante de mémoire sera égale à zéro dans une période de temps calculée associée au stockage d'une partie subséquente (136, 138, 140) du contenu local et avec une connexion à établir entre un élément client (110) et un élément serveur (112) ; et
lors de l'établissement (284) d'une connexion entre l'élément client comprenant la mémoire locale et un élément serveur (112) comprenant une mémoire de serveur (150), envoyer une partie sélectionnée de la partie initiale du contenu local à l'élément serveur depuis l'élément client à l'aide de la connexion.

12. Élément client (110) selon la revendication 11, comprenant en outre :
une interface de support de communication sans fil (148) couplée de manière communicative à la mémoire locale (114) et capable d'être couplée de manière communicative à un élément serveur (112) pour stocker la partie initiale (134) du contenu local (124) sur l'élément serveur.

13. Élément client (110) selon la revendication 11, comprenant en outre :
un module de service à fenêtre (154) couplé à la mémoire locale (114).

14. Élément client (110) selon la revendication 11, comprenant en outre :
un élément d'acquisition de données couplé de manière communicative à la mémoire locale (114).

15. Élément client (110) selon la revendication 14, dans lequel l'élément d'acquisition de données (122) est sélectionné parmi : un dispositif d'entrée de texte (130), un récepteur sans fil, un port de communication, un modem, un récepteur filaire, un dispositif de conversion analogique-numérique, un dispositif de stockage, une caméra (128) et un microphone (126).

16. Procédé de stockage étendu pour contenu local (124), comprenant les étapes consistant à :
surveiller (276) une quantité restante de mémoire associée à une limite de stockage sélectionnée (115) dans une mémoire locale (114) ;
stocker (278) une partie initiale (134) du contenu local dans la mémoire locale ;
déterminer (280) que la quantité restante de mémoire sera égale à zéro dans une période de temps calculée associée au stockage d'une partie subséquente (136, 138, 140) du contenu local et avec une connexion à établir entre un élément client (110) et un élément serveur (112) ;
établir (284) la connexion entre l'élément client comprenant la mémoire locale et l'élément serveur comprenant une mémoire de serveur (150) ; et
envoyer (286) une partie sélectionnée de la partie initiale du contenu local à l'élément serveur à partir de l'élément client à l'aide de la connexion.

17. Procédé selon la revendication 16, comprenant en outre l'étape consistant à :
déterminer que le contenu local (124) doit être stocké dans la mémoire locale (114).

18. Procédé selon la revendication 16, comprenant en outre l'étape consistant à :
stocker la partie subséquente (136, 138, 140) du contenu local (124) dans la mémoire locale (114).

19. Procédé selon la revendication 16, comprenant en outre l'étape consistant à :
détecter (272) la génération du contenu local (124).

20. Procédé selon la revendication 16, comprenant en outre l'étape consistant à:
surveiller (276) un type de contenu et une vitesse de transmission de données associés au contenu local (124).

21. Procédé selon la revendication 20, dans lequel un type de connexion associé à la connexion est déterminé selon le type de contenu et la vitesse de transmission de données.

22. Procédé selon la revendication 16, comprenant en outre l'étape consistant à :
effacer la partie sélectionnée de la partie initiale (134) de la mémoire locale (114).

23. Procédé selon la revendication 16, dans lequel l'établissement (284) d'une connexion entre un élément client (110) comprenant la mémoire locale (114) et un élément serveur (112) comprend en outre l'étape consistant à :
sélectionner (282) un type de connexion associé à la connexion selon un ensemble de paramètres.

24. Procédé selon la revendication 23, dans lequel l'ensemble de paramètres comprend un paramètre parmi un emplacement de l'élément serveur (112), un emplacement de l'élément client (110), un coût de la connexion, la limite de stockage sélectionnée (115), et un type de contenu et une vitesse de transmission de données associés au contenu local (124).

25. Procédé selon la revendication 16, comprenant en outre l'étape consistant à :
réviser (299) une partie sélectionnée du contenu local (124) au niveau de l'élément client (110) à l'aide d'un module de service à fenêtre (154) compris dans l'élément client.

26. Procédé selon la revendication 25, comprenant en outre l'étape consistant à :
établir (298) une nouvelle limite de stockage sélectionnée associée à la mémoire locale (114) qui est inférieure à la limite de stockage sélectionnée (115).

27. Procédé selon la revendication 16, comprenant en outre l'étape consistant à :
diviser la mémoire locale (114) en une mémoire d'entrée et une mémoire de révision.

28. Procédé selon la revendication 16, comprenant en outre l'étape consistant à :
réviser (299) une partie sélectionnée de la partie subséquente (136, 138, 140) du contenu local (124) au niveau de l'élément client (110) à l'aide d'un module de service à fenêtre (154) résidant au niveau de l'élément client.
